# EUROPEAN PATENT APPLICATION

(11) **EP 4 512 870 A1**
(43) Date of publication of application: **26.02.2025**
(21) Application number: 23820014.1
(22) Date of filing: 18.05.2023
(51) Int. Cl.: C09J 139/08, C09J 201/00, C09J 11/06, C09J 11/08, C09J 11/04, C09D 139/08, C09D 201/00, C09D 7/61, C09D 7/63, C09D 7/65

(54) **ADHESIVE COMPOSITION, RUBBER REINFORCEMENT MATERIAL AND PRODUCT**

(30) Priority: 10.06.2022 KR 20220070911
(71) Applicant: Kolon Industries, Inc., Seoul 07793 (KR)
(72) Inventor: LEE, Sung Gyu, Seoul 07793 (KR); JEON, Ok Hwa, Seoul 07793 (KR); LEE, Sang Woo, Seoul 07793 (KR)
(74) Representative: Vossius & Partner Patentanwälte Rechtsanwälte mbB
(86) International application number: PCT/KR2023/006782
(87) International publication number: WO 2023/239078

(57) **Abstract**

The present application relates to an adhesive composition comprising at least naturally occurring acid, a nitrogen compound and a latex; and a rubber reinforcing material and an article comprising the same.

## Description

### [TECHNICAL FIELD]

### CROSS-REFERENCE TO RELATED APPLICATION(S)

This application claims the benefit of Korean Patent Application No. 10-2022-0070911 filed on June 10, 2022 and Korean Patent Application No. 10-2023-0064194 filed on May 18, 2023 in the Korean Intellectual Property Office, the disclosures of which are incorporated herein by reference in their entirety.

### TECHNICAL FIELD

The present application relates to an adhesive composition (e.g., tire cord), a rubber reinforcing material and an article (e.g., tire).

### [BACKGROUND ART]

A fiber reinforcing material is used to reinforce the strength or the like of the rubber structure. For example, polyester fiber, polyamide fiber, aromatic polyamide fiber, polyvinyl alcohol fiber and the like can be used as a reinforcing material for the rubber tire. Further, since the adhesiveness to the rubber may be poor depending on the fiber, the adhesiveness between the rubber and the fiber can be complemented after coating the adhesive onto the fiber surface. For example, in order to improve the adhesive force between the polyester fiber for tire cord (raw cord) and the rubber for tire, an adhesive is coated onto the polyester fiber.

In the prior art, it was common to use resorcinol-formaldehyde or resorcinol-formalin (RF condensate) or a component derived therefrom as an adhesive for the above-mentioned applications. However, RF containing resorcinol which is phenols, and formaldehyde known as a carcinogen, is harmful to the human body, and additional costs for post-management and post-treatment may be incurred for an adhesive waste liquid containing RF. Such RF adhesives trend to gradually decrease in their usage.

Therefore, a technology that can provide physical properties equal to or higher than those of products (adhesive, cord and/or tire) of the prior art while being environment-friendly and being less harmful to the human body is required.

### [DETAILED DESCRIPTION OF THE INVENTION]

### [Technical Problem]

It is an object of the present application to provide an adhesive that is less harmful to a human body and also is environment-friendly.

It is another object of the present application to provide an adhesive that can provide physical properties (e.g., adhesive force) equal to or higher than those of the prior art adhesive in its use.

It is another object of the present application to provide an adhesive that can be produced more simply and easily.

It is yet another object of the present application to provide a reinforcing material (e.g., cord) manufactured by using the adhesive and an article (e.g., tire) including the same.

All of the above and other objects of the present application can be completely solved by the present application which is described in detail below.

### [Technical Solution]

According to the present application, there is provided an adhesive for a tire cord comprising a polyphenol-based naturally occurring extract that can replace RF condensates harmful to a human body and an environment.

In the prior art, the adhesive composition for tires generally contains an RF condensate component. However, the inventors of the present application have developed an adhesive composition comprising a naturally occurring acid in order to solve the problems associated with harmful effect on the environment or human body due to the use of the RF condensate. The adhesive composition of the present application comprising a naturally occurring acid component is not only harmless and environment-friendly, but also facilitates the process of producing the adhesive, compared to the prior art in which RF has been used. Additionally, the adhesive of the present application provides adhesive force equal to or higher than that of the prior art adhesive in which the RF condensate has been used.

Now, an adhesive composition comprising a predetermined amount of a naturally occurring acid, a nitrogen compound, a basic material and a latex provided according to specific embodiments of the present application; an adhesive composition comprising a condensate of a naturally occurring acid and a nitrogen compound, a basic material, and a latex; a rubber reinforcing material comprising a coating layer formed from the adhesive composition and a fiber cord; an article comprising the rubber reinforcing material, and the like will be described in more detail.

### First Aspect: Adhesive Composition

In one embodiment of the present application, this application relates to an adhesive composition. The adhesive composition includes (a) a naturally occurring acid, (b) a nitrogen compound, (c) a basic material and (d) a latex.

As used herein, the term "naturally occurring acid" is a term used to distinguish it from an artificially synthesized acid component, which may mean an acid derived from a plant and/or a microorganism, or an acid comprising material derived from a plant and/or a microorganism. For example, the naturally occurring acid may be a component extracted from plant bark, oak galls, or leaves. More specifically, plants such as Mimosa wattle (*Acacia mollissima*), Quebracho (*Schnopsis sp*) and Radiata pine (*Pinus radiate*) contain substantial amounts of tannins, and such plants can be used to extract naturally occurring acids. Such naturally occurring acids may be, for example, aromatic compounds having a hydroxyl group, that is, phenols or polyphenol-based compounds.

In one exemplary embodiment, the naturally occurring acid may be a naturally occurring tannic acid or may include the same. Tannic acid is an aromatic compound having a phenolic hydroxyl group, and is known as a material capable of having a gallol unit and/or a catechol unit. In addition, such tannic acid may be a mixture of various naturally occurring substances including plants.

Since the naturally occurring acid as described above has an aromatic structure having a hydroxyl group, it can provide suitable aggregation to the composition via a hydrogen bond and/or a hydrophobic bond.

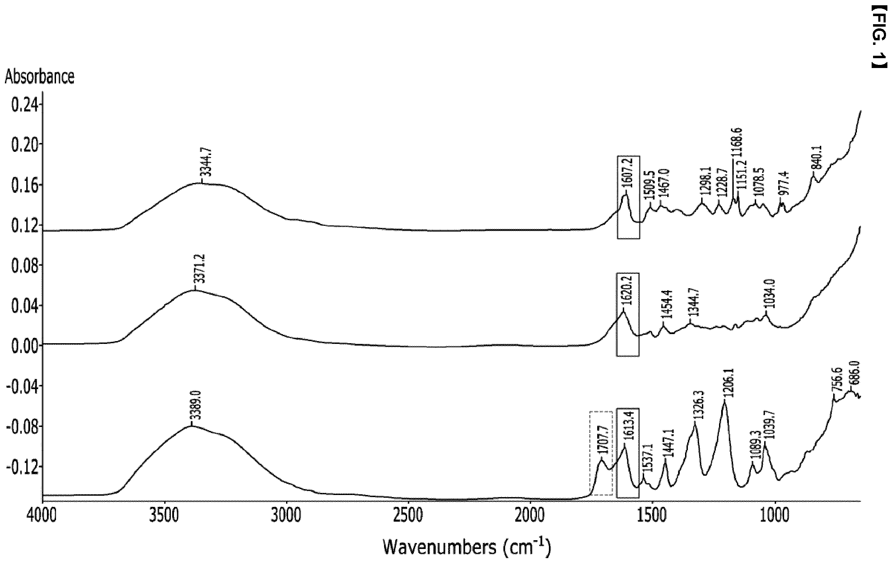

In one exemplary embodiment, the naturally occurring acid may have an infrared absorption peak characteristic as shown in Fig. 1, which will be described later. Specifically, the naturally occurring acid may exhibit an absorption peak at a wavenumber of 1650 cm⁻¹ or less when analyzed by infrared spectroscopy.

As shown in Fig. 1, unlike a naturally occurring tannic acid, a synthetic tannic acid shows an absorption peak at a wavenumber of about 1707 cm⁻¹, which is the peak corresponding to the C=O bond. This is considered to be because in the process of synthesizing tannic acid, units containing C=O are produced more than naturally occurring tannic acid. When many C=O bonds are contained, the affinity with water is high and therefore, an adhesive containing synthetic tannic acid may be thinner than an adhesive containing the same content of naturally occurring tannic acid. This may reduce the adhesive force of the adhesive.

In one exemplary embodiment, the composition may include 1.0% by weight or more of the naturally occurring acid based on 100% by weight of the total content of the composition. The corresponding content may refer to the solid content occupied by the naturally occurring acid in the composition.

Unless otherwise defined herein, in the composition described herein, the content of each component except the solvent may be the solid content. And, the "solid content" may mean the content of the active ingredient (which may be in a solid form) remaining after evaporating moisture or liquid ingredient (e.g., solvent) for a composition or each component contained in the composition. The conditions for evaporating moisture or liquid components (e.g., solvents) are not particularly limited, but for example, the warming (heating) conditions in the range of 70 to 100°C for about 0.5 to 3 hours can be applied.

Specifically, the lower limit of the content of the naturally occurring acid may be, for example, 1.5% by weight or more, 2.0% by weight or more, 2.5% by weight or more, 3.0% by weight or more, 3.5% by weight or more, 4.0% by weight or more, or 4.5% by weight or more. And, the upper limit may be, for example, 5.0% by weight or less, 4.5% by weight or less, 4.0% by weight or less, 3.5% by weight or less, 3.0% by weight or less, 2.5% by weight or less, 2.0% by weight or less, 1.5% by weight or less, 1.0% by weight or less or 0.5% by weight or less. When the above content is satisfied, it is advantageous for an adhesive to provide an appropriate level of viscosity and adhesion.

In one exemplary embodiment, the naturally occurring acid may be mixed with other composition components in a dispersed state in a solvent (water or organic solvent). In this case, the content and type of the solvent for dispersing the naturally occurring acid component can be determined at a level that does not degrade the physical properties such as adhesive force while satisfying the content of the naturally occurring acid based on the entire composition described above.

RF condensates (e.g., resorcinol-formalin) used in the prior art require a separate preparation process before being applied as an adhesive composition. Specifically, since resorcinol has a small molecular weight, in order to compensate for these disadvantages, a preparation process in which resorcinol and formalin are condensed to form a large molecular weight condensate is required. However, in the present application, a separate process for preparing the condensate is not required since the naturally occurring material (naturally occurring acid) described above and the nitrogen compound described below can be reacted under basic material conditions to form a condensate. For this purpose, the adhesive composition of the present application includes a nitrogen compound and a basic material. At this time, the condensate formation reaction as described above can be performed at room temperature (in a state where the temperature is not particularly reduced or heated, for example, it may be in the range of 15 to 35°C, 15 to 25°C).

The nitrogen compound may include a nitrogen element, and may be a material capable of forming a condensation reaction product with tannic acid. As the nitrogen compound, a material different from the basic material described below may be selected.

In one exemplary embodiment, the nitrogen compound may comprise one or more selected from the group consisting of piperazine, piperidine, pyridine, pyrimidine, pyrrolidine, pyrrole, imidazole, indole, aniline, histidine, tryptophan and hexamine, but is not limited thereto.

In one exemplary embodiment, the composition may include 0.01 % by weight or more of the nitrogen compound based on 100% by weight of the total content of the composition. The corresponding amount may mean the solid content occupied by the nitrogen compound in the composition. Specifically, the lower limit of the content of the nitrogen compound may be, for example, 0.05% by weight or more, 0.10% by weight or more, 0.20% by weight or more, 0.30% by weight or more, 0.40% by weight or more, 0.50% by weight or more, 0.60% by weight or more, 0.70% by weight or more, 0.80% by weight or more, 0.90% by weight or more, 1.0% by weight or more, 1.10% by weight or more, 1.20% by weight or more, 1.30% by weight or more, 1.40% by weight or more, 1.50% by weight or more, 1.60% by weight or more, 1.70% by weight or more, 1.80% by weight or more, 1.90% by weight or more, 2.00% by weight or more, 2.10% by weight or more, 2.20% by weight or more, 2.30% by weight or more, 2.40% by weight or more, 2.50% by weight or more, 2.60% by weight or more, 2.70% by weight or more, 2.80% by weight or more, 2.90% by weight or more, 3.00% by weight or more, 3.10% by weight or more, 3.20% by weight or more, 3.30% by weight or more, 3.40% by weight or more, 3.50% by weight or more, 3.60% by weight or more, 3.70% by weight or more, 3.80% by weight or more, or 3.90% by weight or more. And, the upper limit thereof may be, for example, 4.00% by weight or less, 3.50% by weight, 3.00% by weight or less, 2.50% by weight or less, 2.00% by weight or less, 1.50% by weight or less, 1.00% by weight or less, or 0.50% by weight or less. When the above content is satisfied, it is possible to stably obtain a condensate of a natural acid and a nitrogen compound, which is advantageous to secure stable adhesive performance of the adhesive.

In one exemplary embodiment, the nitrogen compound can be mixed with other composition components in a dispersed state in a solvent (e.g., water or organic solvent). In this case, the content and type of the solvent for dispersing the nitrogen compound can be determined at a level that does not degrade the physical properties such as adhesive force while satisfying the content of the naturally occurring acid based on the entire composition described above.

In one exemplary embodiment of the present application, the basic material may include two or more basic materials that are different from each other. For example, at least two or more materials selected from the group consisting of sodium carbonate (Na₂CO₃), potassium hydroxide (KOH), magnesium hydroxide (Mg(OH)₂) and ammonia (NH₃) can be used as the basic material. However, when the condensation reaction conditions of a naturally occurring acid and a nitrogen compound are formed and the pH of the composition described below is satisfied, the types of basic materials usable in the present application are not limited to the above-mentioned basic materials. When two or more basic materials different from each other are included in this way, it is possible to secure physical properties (e.g., adhesive force, fatigue resistance, etc.) at a level equal to or higher than those of the prior art in tire cord applications, as in Examples described below.

In an exemplary embodiment, the composition may include 0.01% by weight or more of the basic material based on 100% by weight of the total content of the composition. The corresponding amount may mean the solid content occupied by the basic material in the composition. Specifically, the lower limit of the content of the basic material may be, for example, 0.05% by weight or more, 0.10% by weight or more, 0.20% by weight or more, 0.30% by weight or more, 0.40% by weight or more, 0.50% by weight or more, 0.60% by weight or more, 0.70% by weight or more, 0.80% by weight or more, 0.90% by weight or more, 1.00% by weight or more, 1.10% by weight or more, 1.20% by weight or more, 1.30% by weight or more, 1.40% by weight or more, 1.50% by weight or more, 1.60% by weight or more, 1.70% by weight or more, 1.80% by weight or more, 1.90% by weight or more, 2.00% by weight or more, 2.10% by weight or more, 2.20% by weight or more, 2.30% by weight or more, 2.40% by weight or more, 2.50% by weight or more, 2.60% by weight or more, 2.70% by weight or more, 2.80% by weight or more, 2.90% by weight or more, 3.00% by weight or more, 3.10% by weight or more, 3.20% by weight or more, 3.30% by weight or more, 3.40% by weight or more, or 3.50% by weight or more. And, the upper limit thereof may be, for example, 4.00% by weight or less, 3.50% by weight or less, 3.00% by weight or less, 2.50% by weight or less. 2.00% by weight or less, 1.50% by weight or less, 1.00% by weight or less, or 0.50% by weight or less. When the above content is satisfied, it is possible to stably form the condition under which condensation of a naturally occurring acid and a nitrogen compound can occur, which is advantageous to secure stable adhesive performance of the adhesive.

In an exemplary embodiment, the basic material may include sodium hydroxide (NaOH) as a first basic material and a second basic material different from the first basic material. If the pH of the adhesive composition cannot be adjusted, uniform mixing may not be achieved during the production process of the adhesive, which may result in a decrease in adhesive force. However, sodium hydroxide is more suitable for pH adjustment of naturally occurring acids. Further, since sodium hydroxide has good compatibility with a composition for forming a first coating layer (e.g., including an epoxy compound and an isocyanate compound) described below, it can provide excellent adhesion in applications of cords. As the second basic material, for example, at least one selected from the group consisting of sodium carbonate (Na₂CO₃), potassium hydroxide (KOH), magnesium hydroxide (Mg(OH)₂) and ammonia (NH₃) can be used.

The contents of the first basic material and the second basic material can be adjusted to a level that can secure sufficient adhesive force and fatigue resistance as in Experiments described below.

In an exemplary embodiment, the adhesive composition may comprise, as a basic material, 0.01 to 1.5% by weight of sodium hydroxide (NaOH) as a first basic material, and 0.01 to 2.5% by weight of a second basic material different from the first basic material.

In a specific embodiment of the present application, sodium hydroxide, which is the first basic material, may be contained in an amount of 0.05% by weight or more, 0.1% by weight or more, 0.2% by weight or more, 0.3% by weight or more, 0.4% by weight or more, 0.5% by weight or more, 0.6% by weight or more, 0.7% by weight or more, 0.8% by weight or more, 0.9% by weight or more, 1.0% by weight or more, 1.1% by weight or more, 1.2% by weight or more, 1.3% by weight or more, or 1.4% by weight or more. And, the upper limit of the content may be, for example, 1.4% by weight or less, 1.3% by weight or less, 1.2% by weight or less, 1.1% by weight or less, 1.0% by weight or less, 0.9% by weight or less, 0.8% by weight or less, 0.7% by weight or less, 0.6% by weight or less, 0.5% by weight or less, 0.4% by weight or less, 0.3% by weight or less, 0.2% by weight or less, or 0.1% by weight or less.

In an exemplary embodiment of the present application, the second basic material may be contained in an amount of 0.05% by weight or more, 0.1% by weight or more, 0.2% by weight or more, 0.3% by weight or more, 0.4% by weight or more, 0.5% by weight or more, 0.6% by weight or more, 0.7% by weight or more, 0.8% by weight or more, 0.9% by weight or more, 1.0% by weight or more, 1.1% by weight or more, 1.2% by weight or more, 1.3% by weight or more, 1.4% by weight or more, 1.5% by weight or more, 1.6% by weight or more, 1.7% by weight or more, 1.8% by weight or more, 1.9% by weight or more, 2.0% by weight or more, 2.1% by weight or more, 2.2% by weight or more, 2.3% by weight or more, or 2.4% by weight or more. And, the upper limit of the content may be, for example, 2.4% by weight or less, 2.3% by weight or less, 2.2% by weight or less, 2.1% by weight or less, 2.0% by weight or less, 1.9% by weight or less, 1.8% by weight or less, 1.7% by weight or less, 1.6% by weight or less, 1.5% by weight or less, 1.4% by weight or less, 1.3% by weight or less, 1.2% by weight or less, 1.1% by weight or less, 1.0% by weight or less, 0.9% by weight or less, 0.8% by weight or less, 0.7% by weight or less, 0.6% by weight or less, 0.5% by weight or less, 0.4% by weight or less, 0.3% by weight or less, 0.2% by weight or less, or 0.1% by weight or less.

In an exemplary embodiment, the basic material may be mixed with other composition components in a dispersed state in a solvent (e.g., water or an organic solvent). In this case, the content and type of the solvent for dispersing the basic material can be determined at a level that satisfies the content of the basic material based on the entire composition described above and does not deteriorate physical properties such as adhesive force.

Although not particularly limited, in an embodiment of the present application, the adhesive may include (in addition to latex) tannic acid, hexamine, sodium hydroxide (NaOH), and ammonia (NH₃). As a result, a condensation reaction may occur between tannic acid as a naturally occurring acid and hexamine as a nitrogen compound under basic conditions. The adhesive composition may include a condensate having a unit represented by the following Chemical Formula 1.

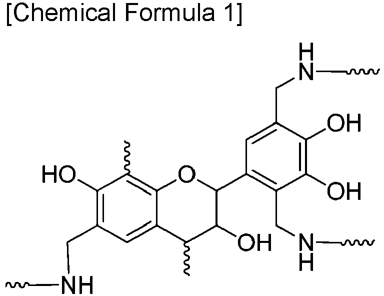

The latex component is a component used in consideration of the use of the composition. Specifically, the adhesive composition can be used for the purpose of reinforcing an adherend, such as a rubber composite or a rubber reinforcing material, and latex can be advantageous in securing affinity, miscibility, or adhesive force with an adherend. In some cases, the latex component contained in the adhesive composition may be selected to be the same as the rubber component forming the adherend.

The type of latex that can be used in the composition is not particularly limited, unless it is contrary to the achievement of the technical object of the present application.

In an exemplary embodiment, the latex that can used includes natural rubber latex, vinyl-pyridine latex (hereinafter "VP latex") such as vinyl-pyridine-styrene-butadiene-copolymer latex, styrene-butadiene-based copolymer latex, acrylic acid ester-based copolymer latex, butyl rubber latex, chloroprene rubber latex, or modified latex thereof. In relation to the modified latex, the method for modifying the latex and the specific type of latex are not limited. For example, a modified latex obtained by modifying a vinyl-pyridine-styrene-butadiene-based copolymer with a carboxyl group or the like can be used.

Commercially available latex can be used as long as it is not contrary to the achievement of the technical object of the present application. For example, LM-60 from Denaka, VP-150 from APCOTEX, VB-1099 from Nippon A & L, 5218 from Closlen, 0653 from Closlen, and the like can be used as commercially available VP latex.

In one exemplary embodiment, a latex component containing at least one of the latexes described above can be used in the adhesive composition.

In one exemplary embodiment, the latex can be mixed with other composition components in a dispersed state in a solvent (water or organic solvent). In this case, the content and type of the solvent used in the latex component can be determined at a level that does not impair the adhesive force of the adhesive composition.

In one exemplary embodiment, the adhesive composition may include 5.0% by weight or more of the latex, based on the total content of the composition. In this case, the content may mean the content occupied by the latex solid content in the composition. Specifically, the lower limit of the content of the latex may be, for example, 6.0% by weight or more, 7.0% by weight or more, 8.0% by weight or more, 9.0% by weight or more, 10.0% by weight or more, 11.0% by weight or more, 12.0% by weight or more, 13.0% by weight or more, 14.0% by weight or more, 15.0% by weight or more, 16.0% by weight or more, 17.0% by weight or more, 18% by weight or more, 19% by weight or more, 20% by weight or more, 21% by weight or more, 22% by weight or more, 23% by weight or more, 24% by weight or more, or 25% by weight or more. And, the upper limit thereof may be, for example, 50% by weight or less, 45% by weight or less, 40% by weight or less, or 35% by weight or less, specifically 30% by weight or less, 29% by weight or less, 28% by weight or less, 27% by weight or less, 26% by weight or less, 25% by weight or less, 24% by weight or less, 23% by weight or less, 22% by weight or less, 21% by weight or less, 20% by weight or less, 19% by weight or less, 18% by weight or less, 17% by weight or less, 16% by weight or less, or 15% by weight or less. When the above range is satisfied, it may be advantageous to ensure the affinity, miscibility, and/or adhesive force for the rubber-containing adherend in which the adhesive is used.

In one exemplary embodiment, the adhesive composition may include 3.0 to 50.0 parts by weight of the naturally occurring acid component based on 100 parts by weight of the latex. For example, the lower limit of the content of the naturally occurring acid (based on 100 parts by weight of the latex) may be, for example, 4 parts by weight or more, 5 parts by weight or more, 6 parts by weight or more, 7 parts by weight or more, 8 parts by weight or more, 9 parts by weight or more, 10 parts by weight or more, 11 parts by weight or more, 12 parts by weight or more, 13 parts by weight or more, 14 parts by weight or more, 15 parts by weight or more, 16 parts by weight or more, 17 parts by weight or more, 18 parts by weight or more, 19 parts by weight or more, 20 parts by weight or more, 21 parts by weight or more, 22 parts by weight or more, 23 parts by weight or more, 24 parts by weight or more, 25 parts by weight or more, 26 parts by weight or more, 27 parts by weight or more, 28 parts by weight or more, 29 parts by weight or more, 30 parts by weight or more, 31 parts by weight or more, 32 parts by weight or more, 33 parts by weight or more, 34 parts by weight or more, 35 parts by weight or more, 36 parts by weight or more, 37 parts by weight or more, 38 parts by weight or more, 39 parts by weight or more, 40 parts by weight or more, 41 parts by weight or more, 42 parts by weight or more, 43 parts by weight or more, 44 parts by weight or more, or 45 parts by weight or more. And, the upper limit of the content of the naturally occurring acid (based on 100 parts by weight of the latex) may be, for example, 50 parts by weight or less, 49 parts by weight or less, 48 parts by weight or less, 47 parts by weight or less, 46 parts by weight or less, 45 parts by weight or less, 44 parts by weight or less, 43 parts by weight or less, 42 parts by weight or less, 41 parts by weight or less, 40 parts by weight or less, 39 parts by weight or less, 38 parts by weight or less, 37 parts by weight or less, 36 parts by weight or less, 35 parts by weight or less, 34 parts by weight or less, 33 parts by weight or less, 32 parts by weight or less, 31 parts by weight or less, 30 parts by weight or less, 29 parts by weight or less, 28 parts by weight or less, 27 parts by weight or less, 26 parts by weight or less, 25 parts by weight or less, 24 parts by weight or less, 23 parts by weight or less, 22 parts by weight or less, 21 parts by weight or less, 20 parts by weight or less, 19 parts by weight or less, 18 parts by weight or less, 17 parts by weight or less, 16 parts by weight or less, 15 parts by weight or less, 14 parts by weight or less, 13 parts by weight or less, 12 parts by weight or less, 11 parts by weight or less, or 10 parts by weight or less. When the above range is satisfied, stable adhesive performance can be secured, and in achieving the technical object of the present application, it can have properties suitable as an adhesive for tire cords.

In one exemplary embodiment, the adhesive composition may include 0.3 to 25.0 parts by weight of the nitrogen compound based on 100 parts by weight of the latex. For example, the lower limit of the content of the nitrogen compound (based on 100 parts by weight of the latex) may be, for example, 0.5 parts by weight or more, 1.0 parts by weight or more, 1.5 parts by weight or more, 2.0 parts by weight or more, 2.5 parts by weight or more, 3.0 parts by weight or more, 3.5 parts by weight or more, 4.0 parts by weight or more, 4.5 parts by weight or more, 5.0 parts by weight or more, 5.5 parts by weight or more, 6.0 parts by weight or more, 6.5 parts by weight or more, 7.0 parts by weight or more, 7.5 parts by weight or more, 8.0 parts by weight or more, 8.5 parts by weight or more, 9.0 parts by weight or more, 9.5 parts by weight or more, 10.0 parts by weight or more, 10.5 parts by weight or more, 11.0 parts by weight or more, 11.5 parts by weight or more, 12.0 parts by weight or more, 12.5 parts by weight or more, 13.0 parts by weight or more, 13.5 parts by weight or more, 14.0 parts by weight or more, 14.5 parts by weight or more, 15.0 parts by weight or more, 15.5 parts by weight or more, 16.0 parts by weight or more, 16.5 parts by weight or more, 17.0 parts by weight or more, 17.5 parts by weight or more, 18.0 parts by weight or more, 18.5 parts by weight or more, 19.0 parts by weight or more, 19.5 parts by weight or more, or 20 parts by weight or more. And, the upper limit of the content of the nitrogen compound (based on 100 parts by weight of the latex ) may be, for example, 24.5 parts by weight or less, 24.0 parts by weight or less, 23.5 parts by weight or less, 23.0 parts by weight or less, 22.5 parts by weight or less, 22.0 parts by weight or less, 21.5 parts by weight or less, 21.0 parts by weight or less, 20.5 parts by weight or less, 20.0 parts by weight or less, 19.5 parts by weight or less, 19.0 parts by weight or less, 18.5 parts by weight or less, 18.0 parts by weight or less, 17.5 parts by weight or less, 17.0 parts by weight or less, 16.5 parts by weight or less, 16.0 parts by weight or less, 15.5 parts by weight or less, 15.0 parts by weight or less, 14.5 parts by weight or less, 14.0 parts by weight or less, 13.5 parts by weight or less, 13.0 parts by weight or less, 12.5 parts by weight or less, 12.0 parts by weight or less, 11.5 parts by weight or less, 11.0 parts by weight or less, 10.5 parts by weight or less, 10.0 parts by weight or less, 9.5 parts by weight or less, 9.0 parts by weight or less, 8.5 parts by weight or less, 8.0 parts by weight or less, 7.5 parts by weight or less, 7.0 parts by weight or less, 6.5 parts by weight or less, 6.0 parts by weight or less, 5.5 parts by weight or less, 5.0 parts by weight or less, 4.5 parts by weight or less, 4.0 parts by weight or less, 3.5 parts by weight or less, 3.0 parts by weight or less, 2.5 parts by weight or less, 2.0 parts by weight or less, 1.5 parts by weight or less, or 1.0 parts by weight or less. When the above content range is satisfied, stable adhesive performance and fatigue resistance can be secured.

In one exemplary embodiment, the adhesive composition may include 0.1 to 20 parts by weight of the basic compound based on 100 parts by weight of the latex. For example, the lower limit of the content of the basic compound (based on 100 parts by weight of the latex) may be, for example, 0.5 parts by weight or more, 1.0 parts by weight or more, 1.5 parts by weight or more, 2.0 parts by weight or more, 2.5 parts by weight or more, 3.0 parts by weight or more, 3.5 parts by weight or more, 4.0 parts by weight or more, 4.5 parts by weight or more, 5.0 parts by weight or more, 5.5 parts by weight or more, 6.0 parts by weight or more, 6.5 parts by weight or more, 7.0 parts by weight or more, 7.5 parts by weight or more, 8.0 parts by weight or more, 8.5 parts by weight or more, 9.0 parts by weight or more, 9.5 parts by weight or more, 10.0 parts by weight or more, 10.5 parts by weight or more, 11.0 parts by weight or more, 11.5 parts by weight or more, 12.0 parts by weight or more, 12.5 parts by weight or more, 13.0 parts by weight or more, 13.5 parts by weight or more, 14.0 parts by weight or more, 14.5 parts by weight or more, 15.0 parts by weight or more, 15.5 parts by weight or more, 16.0 parts by weight or more, 16.5 parts by weight or more, 17.0 parts by weight or more, 17.5 parts by weight or more, 18.0 parts by weight or more, 18.5 parts by weight or more, 19.0 parts by weight or more, 19.5 parts by weight or more, or 20 parts by weight or more. And, the upper limit of the content of the basic compound (based on 100 parts by weight of the latex) may be, for example, 19.5 parts by weight or less, 19.0 parts by weight or less, 18.5 parts by weight or less, 18.0 parts by weight or less, 17.5 parts by weight or less, 17.0 parts by weight or less, 16.5 parts by weight or less, 16.0 parts by weight or less, 15.5 parts by weight or less, 15.0 parts by weight or less, 14.5 parts by weight or less, 14.0 parts by weight or less, 13.5 parts by weight or less, 13.0 parts by weight or less, 12.5 parts by weight or less, 12.0 parts by weight or less, 11.5 parts by weight or less, 11.0 parts by weight or less, 10.5 parts by weight or less, 10.0 parts by weight or less, 9.5 parts by weight or less, 9.0 parts by weight or less, 8.5 parts by weight or less, 8.0 parts by weight or less, 7.5 parts by weight or less, 7.0 parts by weight or less, 6.5 parts by weight or less, 6.0 parts by weight or less, 5.5 parts by weight or less, 5.0 parts by weight or less, 4.5 parts by weight or less, 4.0 parts by weight or less, 3.5 parts by weight or less, 3.0 parts by weight or less, 2.5 parts by weight or less, 2.0 parts by weight or less, or 1.5 parts by weight or less. When the above content range is satisfied, stable adhesive performance and fatigue resistance can be secured.

In one exemplary embodiment, the coating layer may include, as a basic material, 0.1 to 9.0% by weight of sodium hydroxide (NaOH) as a first basic material, and 0.1 to 14.0% by weight of a second basic material different from the first basic material.

At this time, the contents of the first basic material and the second basic material may be based on 100 parts by weight of the latex component.

For example, the content of sodium hydroxide (NaOH) as the first basic material (based on 100 parts by weight of the latex component) may be, for example, 0.5 parts by weight or more, 1.0 parts by weight or more, 1.5 parts by weight or more, 2.0 parts by weight or more, 2.5 parts by weight or more, 3.0 parts by weight or more, 3.5 parts by weight or more, 4.0 parts by weight or more, 4.5 parts by weight or more, 5.0 parts by weight or more, 5.5 parts by weight or more, 6.0 parts by weight or more, 6.5 parts by weight or more, 7.0 parts by weight or more, 7.5 parts by weight or more, or 8.0 parts by weight or more, and the upper limit thereof may be, for example, 8.5 parts by weight or less, 8.0 parts by weight or less, 7.5 parts by weight or less, 7.0 parts by weight or less, 6.5 parts by weight or less, 6.0 parts by weight or less, 5.5 parts by weight or less, 5.0 parts by weight or less, 4.5 parts by weight or less, 4.0 parts by weight or less, 3.5 parts by weight or less, 3.0 parts by weight or less, 2.5 parts by weight or less, 2.0 parts by weight or less, 1.5 parts by weight or less, 1.0 parts by weight or less, or 0.5 parts by weight or less.

In another exemplary embodiment, the content of the second basic material (based on 100 parts by weight of the latex component) may be, for example, 0.5 parts by weight or more, 1.0 parts by weight or more, 1.5 parts by weight or more, 2.0 parts by weight or more, 2.5 parts by weight or more, 3.0 parts by weight or more, 3.5 parts by weight or more, 4.0 parts by weight or more, 4.5 parts by weight or more, 5.0 parts by weight or more, 5.5 parts by weight or more, 6.0 parts by weight or more, 6.5 parts by weight or more, 7.0 parts by weight or more, 7.5 parts by weight or more, 8.0 parts by weight or more, 8.5 parts by weight or more, 9.0 parts by weight or more, 9.5 parts by weight or more, 10.0 parts by weight or more, 10.5 parts by weight or more, 11.0 parts by weight or more, 11.5 parts by weight or more, 12.0 parts by weight or more, 12.5 parts by weight or more, 13.0 parts by weight or more, 13.5 parts by weight or more, or 14.0 parts by weight or more, and the upper limit thereof may be, for example, 14.5 parts by weight or less, 14.0 parts by weight or less, 13.5 parts by weight or less, 13.0 parts by weight or less, 12.5 parts by weight or less, 12.0 parts by weight or less, 11.5 parts by weight or less, 11.0 parts by weight or less, 10.5 parts by weight or less, 10.0 parts by weight or less, 9.5 parts by weight or less, 9.0 parts by weight or less, 8.5 parts by weight or less, 8.0 parts by weight or less, 7.5 parts by weight or less, 7.0 parts by weight or less, 6.5 parts by weight or less, 6.0 parts by weight or less, 5.5 parts by weight or less, 5.0 parts by weight or less, 4.5 parts by weight or less, 4.0 parts by weight or less, 3.5 parts by weight or less, 3.0 parts by weight or less, 2.5 parts by weight or less, 2.0 parts by weight or less, 1.5 parts by weight or less, 1.0 parts by weight or less, or 0.5 parts by weight or less.

In one exemplary embodiment, the adhesive composition may further comprise a solvent. The solvent component contained in the adhesive may mean a component excluding the above-mentioned other components whose content can be measured as a solid content. For example, the solvent component may be referred to as a non-solid content component.

The solvent may include, for example, at least one selected from known organic solvents and water. The known organic solvent is not particularly limited, and examples thereof include toluene and ethanol.

In one exemplary embodiment, the solvent component in the adhesive composition may contain water or may be water.

Further, in a specific embodiment of the present application, in consideration of harmfulness and flammability to the human body, the adhesive composition may include water without using an organic solvent (e.g., toluene or ethanol, etc.) as a solvent component. Alternatively, as a solvent of the adhesive composition, an excessive amount of water may be used together with a small amount of an organic solvent.

In one exemplary embodiment, based on the total weight of the adhesive composition, the content of the solvent in the adhesive composition may be 30% by weight or more, 35% by weight or more, 40% by weight or more, 45% by weight or more, 50% by weight or more, 55% by weight or more, 60% by weight or more, 65% by weight or more, 70% by weight or more, 75% by weight or more, 80% by weight or more, 85% by weight or more, or 90% by weight or more. And, the upper limit of the content of the solvent may be, for example, 95% by weight or less, 90% by weight or less, 85% by weight or less, 80% by weight or less, 75% by weight or less, 70% by weight or less, or 65% by weight or less. The content of the above-mentioned solvent can be appropriately adjusted in consideration of dispersibility and miscibility of each component forming the composition, coating workability of the adhesive, processability, cost, and the like.

In one exemplary embodiment, the solvent included in the content range may be water or may include water.

In another exemplary embodiment, the excess or the majority of the solvent content may be occupied by water. For example, the excess of the solvent component content in the composition (e.g., about 30% by weight or more, or 35% by weight or more, or 40% by weight or more, or 45% by weight or more, or 50% by weight or more, or 55% by weight or more, based on the total weight of the adhesive composition) can be water, and the remaining content excluding water in the solvent (e.g., 15% by weight or less, 10% by weight or less, or 5% by weight or less based on the total weight of the adhesive composition) may be occupied by an organic solvent or the like.

In one exemplary embodiment, the adhesive composition may be a water-based composition or an aqueous composition. Specifically, the solvent may include an excessive amount of water and a small amount of an organic solvent. Alternatively, the solvent may be water.

Although not particularly limited, water used as a solvent in the adhesive composition may be demineralized water (or pure water, demineralized water).

In one exemplary embodiment, the content of water may be 30% by weight or more, 35% by weight or more, 40% by weight or more, 45% by weight or more, 50% by weight or more, 55% by weight or more, 60% by weight or more, 65% by weight or more, 70% by weight or more, 75% by weight or more, 80% by weight or more, 85% by weight or more, or 90% by weight or more based on the total weight of the composition. And, the upper limit of water may be, for example, 95% by weight or less, 90% by weight or less, 85% by weight or less, 80% by weight or less, 75% by weight or less, 70% by weight or less, 65% by weight or less, 60% by weight or less, 55% by weight or less, or 50% by weight or less.

The content of the above-mentioned solvent can be appropriately adjusted in consideration of dispersibility and miscibility of each component forming the composition, coating workability of the adhesive, processability, cost, and the like.

In one exemplary embodiment, the content of the solvent in the entire composition may mean the content of water that is mixed as a solvent.

In another exemplary embodiment, it can also mean that the content of the solvent in the entire composition includes not only the content of water mixed as a solvent, but also the content of a solvent (e.g., organic solvent and/or water) for dispersing the solid content component, for example, as in the case of mixing a latex dispersed in a solvent with other components to form a composition.

In one exemplary embodiment, the adhesive composition may further include a small amount of a known adhesive (constituent) component known in the art related to tires or tire cords. At this time, the small amount may mean that it is included in the composition in an amount less than the component that is most frequently used among the latex component, the acid component and the nitrogen compound. Alternatively, the small amount may mean being included in the composition in an amount less than the component that is used least frequently among the latex component, the acid component and the nitrogen compound.

As a known adhesive component that can be used, for example, an isocyanate, an epoxy, a urethane, or various additives, and the like can be mentioned. Specific types of compounds such as isocyanate, epoxy, and urethane may be selected at a level that is not contrary to the achievement of the technical object of the present application, and the content can also be used in a small amount at a level that is not contrary to the achievement of the technical object of the present application.

In one exemplary embodiment, the adhesive composition may be formed by mixing a solvent with other components other than the solvent. Specifically, in a specific embodiment of the present application, the adhesive composition may be a mixture of a naturally occurring acid, a nitrogen compound, a latex, and a solvent. Alternatively, the adhesive composition may be a mixture of a naturally occurring acid, a nitrogen compound, a latex, a solvent, and a known adhesive component. For example, the composition contains a solvent (non-solid component) in an amount of 25% by weight or more, 30% by weight or more, 35% by weight or more, 40% by weight or more, 45% by weight or more, 50% by weight or more, 55% by weight or more, 60% by weight or more, 65% by weight or more, 70% by weight or more, or 75% by weight or more, and 95% by weight or less, 90% by weight or less, 85% by weight or less, or 80% by weight or less, and may contain as much solid content as the remaining residue amount. Further, the other components other than the solvent, that is, the solid content component, may be, for example, 75% by weight or less, 70% by weight or less, 65% by weight or less, 60% by weight or less, 55% by weight or less, 50% by weight or less, 45% by weight or less, 40% by weight or less, 35% by weight or less, 30% by weight or less, or 25% by weight or less, and 5% by weight or more, 10% by weight or more, 15% by weight or more, or 20% by weight or more. Alternatively, the above content of the solid component and the remaining amount of the solvent (non-solid component) may form a composition.

In an embodiment related to the present application, the adhesive composition does not include resorcinol-formaldehyde (RF) or a component derived therefrom. That is, the composition of the present application may be an RF-free composition. Therefore, an adhesive composition that is not harmful to the human body and is environment-friendly as compared with the prior art using the RF component can be provided. In addition, the use of such adhesive compositions provides the advantage of reducing post-management and post-treatment costs.

### Second Aspect: Adhesive Composition

In another embodiment of the present application, this application relates to an adhesive composition comprising the above components, specifically, in which each component contained in the composition is mixed.

Specifically, the adhesive composition comprises the latex; and a condensate of a naturally occurring acid and a nitrogen compound, and has a pH within the range of 9.0 to 11.0. As described above, since the naturally occurring acid and the nitrogen compound are condensed in the presence of a basic material that forms the above-mentioned pH conditions, the adhesive composition can have a configuration as described above.

For example, the pH of the adhesive composition may be 9.1 or more, 9.2 or more, 9.3 or more, 9.4 or more, 9.5 or more, 9.6 or more, 9.7 or more, 9.8 or more, 9.9 or more, 10.0 or more, 10.1 or more, 10.2 or more, 10.3 or more, 10.4 or more, 10.5 or more, 10.6 or more, 10.7 or more, 10.8 or more, or 10.9 or more. And, the upper limit of the pH may be, for example, 10.9 or less, 10.8 or less, 10.7 or less, 10.6 or less, 10.5 or less, 10.4 or less, 10.3 or less, 10.2 or less, 10.1 or less, 10.0 or less, 9.9 or less, 9.8 or less, 9.7 or less, 9.6 or less, 9.5 or less, 9.4 or less, 9.3 or less, 9.2 or less, or 9.1 or less.

In one exemplary embodiment, the adhesive composition may include 5 to 50% by weight of a latex. Since the specific content of latex is the same as described above, it will be omitted.

In one exemplary embodiment, the adhesive composition may include a condensate of a naturally occurring acid and a nitrogen compound. Specifically, the adhesive composition may include, for example, a condensate of 1.0 to 5.0% by weight of a naturally occurring acid and 0.01 to 4.0% by weight of a nitrogen compound. Since the specific contents of the naturally occurring acid and the nitrogen compound are the same as those described above, they will be omitted.

In one exemplary embodiment, the adhesive composition may include 0.01 to 4.0% by weight of a basic material. Since the specific content of the basic material is the same as described above, it will be omitted.

In one exemplary embodiment, the adhesive composition may include the condensate (condensate of a naturally occurring acid-nitrogen compound) in an amount of 1.0 to 15.0% by weight. The content of the condensate may also mean the solid content as described above. Specifically, the lower limit of the content of the condensate may be, for example, 1.5% by weight or more, 2.0% by weight or more, 2.5% by weight or more, 3.0% by weight or more, 3.5% by weight or more, 4.0% by weight or more, 4.5% by weight or more, 5.0% by weight or more, 5.5% by weight or more, 6.0% by weight or more, 6.5% by weight or more, 7.0% by weight or more, 7.5% by weight or more, 8.0% by weight or more, 8.5% by weight or more, 9.0% by weight or more, 10.0% by weight or more, 10.5% by weight or more, 11.0% by weight or more, 11.5% by weight or more, 12.0% by weight or more, 12.5% by weight or more, 13.0% by weight or more, 13.5% by weight or more, 14.0% by weight or more, or 14.5% by weight or more. And, the upper limit thereof may be, for example, 14.5% by weight or less, 14.0% by weight or less, 13.5% by weight or less, 13.0% by weight or less, 12.5% by weight or less, 12.0% by weight or less, 11.5% by weight or less, 11.0% by weight or less, 10.5% by weight or less, 10.0% by weight or less, 9.5% by weight or less, 9.0% by weight or less, 8.5% by weight or less, 8.0% by weight or less, 7.5% by weight or less, 7.0% by weight or less, 6.5% by weight or less, 6.0% by weight or less, 5.5% by weight or less, 5.0% by weight or less, 4.5% by weight or less, 4.0% by weight or less, 3.5% by weight or less, 3.0% by weight or less, 2.5% by weight or less, 2.0% by weight or less, or 1.5% by weight or less.

In a specific embodiment of the present application, the adhesive composition may further include other components in addition to the latex and the condensate.

For example, the adhesive composition may further include a naturally occurring acid. Since the details of the component (type, content, etc.) are the same as those described above, they will be omitted.

For example, the adhesive composition may further include a nitrogen compound. As described above, the nitrogen compound may be a material that contains a nitrogen element and is capable of forming a condensation reaction product with tannic acid. As the nitrogen compound, a material different from the basic material described below may be selected. The details (type, content, etc.) of the component are the same as those described above, they will be omitted.

For example, the adhesive composition may further include one or two or more basic materials. At this time, the basic material may include two or more basic materials that are different from each other, as described above. The details (type, content, etc.) of the component is the same as those described above, they will be omitted.

For example, the adhesive may further include a solvent. Since the details (type, content, etc.) of the component are the same as those described above, they will be omitted.

### Third Aspect: Rubber Reinforcing Material

In another embodiment of the present application, the present application relates to a rubber reinforcing material. The rubber reinforcing material may be, for example, a tire cord coated with the above-mentioned adhesive on a base substrate. The base substrate may be a raw cord including a fiber component.

Specifically, the rubber reinforcing material (e.g., tire cord) may include: a raw cord; and a coating layer formed on the raw cord. The coating layer may be a coating layer formed from the above-mentioned adhesive composition or may include the same, and may be coated in a shape surrounding the surface of the raw cord.

The raw cord may be or include a textile fabric formed by twisting filament fibers. In a specific embodiment of the present application, the raw cord can be formed by twisting (e.g., primarily twisting and/or secondarily twisting) one or more fibers (e.g., multi-filaments). For example, the raw cord may be a two-ply or three-ply cord.

The fiber included in the raw cord is not particularly limited, and examples thereof may include at least one selected from the group consisting of a polyester fiber (e.g., PET fiber), a nylon fiber, an aramid fiber, a carbon fiber, a polyketone fiber, a cellulose fiber (e.g., lyocell fiber, rayon fiber) and a glass fiber.

In one exemplary embodiment, the raw cord may be a hybrid cord. For example, the raw cord may be a hybrid cord formed by secondarily twisting primarily twisted yarns having different types of fibers, such as including an aramid primarily twisted yarn and a nylon primarily twisted yarn.

In the case of a hybrid cord formed by secondarily twisting different types of primarily twisted yarns, due to differences in properties (e.g., modulus, etc.) between the primarily twisted yarns, the fatigue resistance is lowered, and therefore, the stability of the tire may be deteriorated. However, since the adhesive composition described above not only forms an appropriate coating layer on the hybrid raw cord as an adherend, but also imparts excellent adhesive force between the hybrid raw cord as an adherend and a tire component adjacent thereto, it is expected that the problem of deterioration of tire fatigue resistance due to the use of hybrid cords can be improved to some extent.

In one exemplary embodiment, the number of twists of the fiber strands used to form the raw cord may be 150 or more and 900 TPM (twist per meter) or less in the primarily twisting and/or secondarily twisting. For example, the number of twists may be 200 TPM or more, 250 TPM or more, 300 TPM or more, 350 TPM or more, 400 TPM or more, 450 TPM or more, 500 TPM or more, or 550 TPM or more. Further, the upper limit of the number of twists may be, for example, 850 TPM or less, 800 TPM or less, 750 TPM or less, 700 TPM or less, 650 TPM or less, 600 TPM or less, 550 TPM or less, 500 TPM or less, 450 TPM or less, or 400 TPM or less.

Although not particularly limited, the total fineness of the raw cord may be in the range of 400 to 9000 dtex. Specifically, considering the securing of mechanical properties, etc., the total fineness of the raw cord may be 1300 dtex or more, 1350 dtex or more, 1400 dtex or more, 1450 dtex or more, 1500 dtex or more, 1550 dtex or more, 1600 dtex or more, 1650 dtex or more, 1750 dtex or more, or 1800 dtex or more, and the upper limit may be, for example, 2000 dtex or less, 1950 dtex or less, 1900 dtex or less, 1850 dtex or less, 1800 dtex or less, 1750 dtex or less, 1700 dtex or less, 1650 dtex or less, or 1600 dtex or less.

In one exemplary embodiment, the coating layer may be a coating layer formed from the adhesive composition described above or may include the same. Specifically, the tire cord may be formed by coating the adhesive composition onto the raw cord. The method of coating the adhesive composition is not particularly limited. For example, the coating may be performed by a known dipping or spraying method.

According to a specific embodiment of the present application, the rubber reinforcing material (e.g., tire cord) in which the adhesive composition described above was coated onto the surface of the raw cord can provide excellent adhesive force described later.

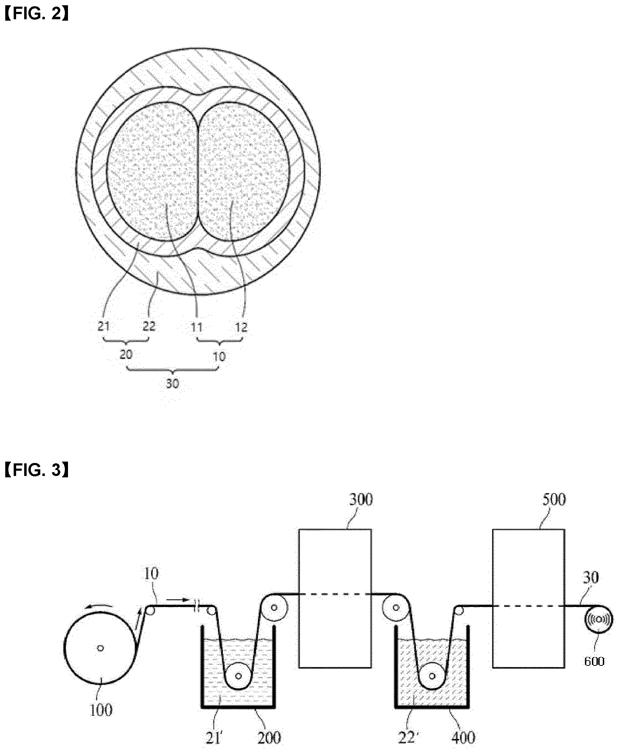

In one exemplary embodiment, the coating layer included in the tire cord may include a first coating layer; and a second coating layer formed on the first coating layer. Specifically, the tire cord may sequentially include a raw cord, a first coating layer, and a second coating layer (see Fig. 2 ).

Although not particularly limited, the first coating layer and the second coating layer may have visibly recognizable boundaries.

In one exemplary embodiment, the first coating layer may include the same component as the second coating layer.

In another exemplary embodiment, the first coating layer may include a component different from that of the second coating layer.

Specifically, when the first coating layer and the second coating layer include different components, the first coating layer can be formed by dipping the raw cord into the composition (first coating liquid) for forming a first coating layer including a reactive active group-imparting component. That is, the first coating layer is formed so as to surround the raw cord or its surface. The type of the reactive active group-imparting component used in the first coating layer is not particularly limited, and for example, the first coating liquid may include one or more compounds selected from epoxy and isocyanate. The solvent component included in the first coating layer forming composition (first coating liquid) is not particularly limited, but considering the miscibility with the second coating layer and the like, the same solvent (e.g., water) included in the second coating layer-forming composition may be included in the first coating layer-forming composition. Further, the second coating layer is formed by dipping a tire cord (or tire cord precursor) on which the first coating layer is formed on the surface into the second coating layer-forming composition (second coating liquid), and the second coating layer-forming composition (second coating liquid) may be the same as the above-mentioned adhesive composition of the present application.

In one exemplary embodiment, the first coating liquid may include an isocyanate compound and an epoxy compound. In this case, the epoxy compound and the isocyanate compound may be used in a weight ratio of 4:1 to 1:4, 3:1 to 1:3, or 2:1 to 1:2 to achieve sufficient crosslinking and an appropriate level of curing.

In another exemplary embodiment, the weight of the isocyanate compound in the entire composition may be greater than the weight of the epoxy compound, on the premise that the content range is satisfied.

### Fourth Aspect: Rubber Reinforcing Material

In another embodiment of the present application, the present application relates to a rubber reinforcing material. The rubber reinforcing material may be, for example, a tire cord coated with the above-mentioned adhesive on a base substrate. The base substrate may be a raw cord containing a fiber component. Since the details of the base material are the same as those described above, they will be omitted.

In one exemplary embodiment, the coating layer may include 100 parts by weight of a latex; 3.0 to 25.0 parts by weight of a naturally occurring acid; 0.3 to 25.0 parts by weight of a nitrogen compound, and 0.1 to 15.0 parts by weight of a basic material. Since the specific types and contents of each component are the same as those described above, they will be omitted.

In one exemplary embodiment, the coating layer may include, as a basic material, 0.1 to 9.0 parts by weight or less of sodium hydroxide (NaOH) as a first basic material and 0.1 to 14.0 parts by weight of a second basic material different from the first basic material. At this time, the contents of the first basic material and the second basic material are based on 100 parts by weight of the latex component. Since the specific types and contents of each component are the same as those described above, they will be omitted.

In one exemplary embodiment, the coating layer may further include a condensate of the naturally occurring acid and the nitrogen compound. Since the specific types and contents of each component are the same as those described above, they will be omitted.

In one exemplary embodiment, the coating layer may include 2.0 to 300 parts by weight of the condensate (condensate of a naturally occurring acid and a nitrogen compound) based on 100 parts by weight of the latex. Specifically, (based on 100 parts by weight of latex) the coating layer contains the condensate in an amount of 5 parts by weight or more, 10 parts by weight or more, 15 parts by weight or more, 20 parts by weight or more, 25 parts by weight or more, 30 parts by weight or more, 35 parts by weight or more. or more, 40 parts by weight or more, 45 parts by weight or more, or 50 parts by weight or more, and the condensate may be included in an amount of 250 parts by weight or less, 200 parts by weight or less, 150 parts by weight or less, 100 parts by weight or less, or 50 parts by weight or less.

In one exemplary embodiment, the basic material may include sodium hydroxide (NaOH) as a first basic material and a second basic material different from the first basic material. The specific type of the second basic material and the content of each basic material are the same as those described above.

### Fifth Aspect: Preparation Method of Rubber Reinforcing Material

In yet another embodiment of the present application, the present application relates to a method for preparing a rubber reinforcing material. The preparation method of the rubber reinforcing material comprises a step of coating a coating liquid onto a base substrate for rubber reinforcing material to form a coating layer.

The method of coating the coating liquid onto the base substrate is not particularly limited, and for example, it may be spraying or dipping, preferably dipping.

In one exemplary embodiment, the rubber reinforcing material may be a tire cord.

In one exemplary embodiment, the base substrate may be a fiber substrate, specifically raw cord. The details of the raw cord forming material and the like are the same those described above.

In one exemplary embodiment, the coating solution may be the above-mentioned adhesive composition.

In one exemplary embodiment, the method comprises a step of coating a first coating liquid onto the base substrate for rubber reinforcing material to form a first coating layer on the base substrate; and a step of coating a second coating liquid onto the first coating layer to form a second coating layer on the first coating layer.

The method of coating the first coating liquid onto the base substrate or coating the second coating liquid onto the first coating layer is not particularly limited, and for example, it may be spraying or dipping, preferably dipping.

After coating the coating liquid for forming the first and/or second coating layer, drying and/or curing of the coating liquid may be performed, if necessary.

In one exemplary embodiment, the components of the first coating liquid and the second coating liquid may be the same or different.

For example, the first coating liquid may include an epoxy compound and an isocyanate compound in order to impart a reactive group to the fiber substrate or the like. At this time, the epoxy compound and the isocyanate compound may be used in a weight ratio of 4:1 to 1:4, 3:1 to 1:3, or 2:1 to 1:2 so that sufficient crosslinking and appropriate level of curing can be performed.

In one exemplary embodiment, the first coating liquid may include a solvent. That is, the first coating liquid may include an epoxy compound, an isocyanate compound, and a solvent.

When the content of the solvent is insufficient, the primary coating by dipping is not performed smoothly, and when the content of the solvent is too large, the reactive group is not sufficiently imparted to the base substrate for reinforcing rubber. Considering these points, the solvent has a content of 94 to 99% by weight based on the total weight of the first coating liquid, and the mixture of the epoxy compound and the isocyanate compound has a content of 1 to 6% by weight. That is, the first coating liquid includes 1 to 6% by weight of a mixture consisting of an epoxy compound and an isocyanate compound and 94 to 99% by weight of a solvent based on the total weight. Although not particularly limited, the solvent that can be included or used in the first coating liquid may include the same components as the solvent of the second coating liquid.

In one exemplary embodiment, the base substrate for rubber reinforcing material can be dipped in the first coating liquid and then dried. Specifically, the first coating liquid is coated onto the base substrate for rubber reinforcing material by dipping. Then, the first coating liquid can be dried and cured to form a first coating layer.

In a specific embodiment according to the present application, drying of the first coating liquid coated onto the base substrate may be performed at a temperature of 100 to 160°C for 30 to 150 seconds. Further, in a specific embodiment of the present application, after drying, it is possible to perform a step of curing the dried first coating liquid at a temperature of 200 to 260°C for 30 to 150 seconds. A first coating layer is formed on the base substrate for rubber reinforcing material according to the drying and curing. Through drying and curing under the above conditions, the first coating layer may be stably formed on the base substrate for rubber reinforcing material.

Although not particularly limited, a tension in the range of 0.05 to 3.00 g/d can be applied to the raw cord during the dipping, drying, and/or curing process. However, another embodiment of the present application is not limited thereto, and tension may not be applied to the raw cord.

In one exemplary embodiment, the second coating liquid different from the first coating liquid including the epoxy compound and the isocyanate compound may be the above-mentioned adhesive composition of the present application. In a specific embodiment of the present application, the second coating liquid may include at least a naturally occurring acid, a nitrogen compound, a basic material and a latex.

In a specific embodiment according to the present application, the method may further include a step of forming a second coating layer on a base substrate for a rubber reinforcing material to which a reactive active group is imparted, that is, on the first coating layer. A process (e.g., method and conditions) of forming the second coating layer may be the same as or similar to that of forming the first coating layer.

For example, a second coating liquid can be coated onto the base substrate and the first coating layer to form a second coating layer. Alternatively, the second coating liquid can be coated onto the base substrate and the first coating layer, and then the second coating liquid can be dried and cured. The second coating liquid can be applied by dipping, spraying or the like.

In a specific embodiment of the present application, drying of the second coating liquid can be performed at a temperature of 100 to 160°C for 30 to 150 seconds. Further, in a specific embodiment of the present application, after the drying, the second coating liquid can be cured at a temperature of 200 to 260°C for 30 to 150 seconds. By drying and curing under the above conditions, the second coating layer may be stably formed on the first coating layer. As a result, a rubber reinforcing material having a coating layer is provided.

Although not particularly limited, a tension in the range of 0.05 to 3.00 g/d may be applied to the raw cord during the dipping, drying, and/or curing process. However, another embodiment of the present application is not limited thereto, and tension may not be applied to the raw cord.

A method of manufacturing a rubber reinforcing material according to an exemplary embodiment of the present application will be described below with reference to Figs. 2 and 3.

A raw cord 10 may include a primarily twisted yarn 11 and a primarily twisted yarn 12. A raw cord 10 may be manufactured and/or distributed in a state of being wound around a first winder 100. Then, the raw cord 10 can be dipped in a first coating liquid 21' contained in a first coating tank 200 and coated onto the raw cord 10. During the dipping step, the tension, dipping time and temperature can be appropriately adjusted, which may be appropriately adjusted by those skilled in the art.

Next, the first coating liquid 21' applied to the raw cord 10 may be dried and cured. Drying may be performed in a drying device 300. Conditions such as temperature and time for drying and curing are as described above.

Next, a step of forming a coating layer 20 is performed. The coating layer 20 may include the first coating layer 21 and the second coating layer 22. A step of forming the second coating layer 22 on the first coating layer 21 is performed. The second coating layer forming step is a step of applying the rubber-based adhesive composition to the raw cord 10 to which the active group is imparted by the first coating layer 21. For the formation of the second coating layer, a second coating liquid having a composition different from that of the first coating liquid can be used, and the dipping step can be applied in the same manner as in the formation of the first coating layer.

For the formation of the second coating layer 22, the raw cord 10 coated with the first coating layer 21 is dipped in a second coating liquid 22'. The second coating liquid 22' is contained in the second coating tank 400. The second coating liquid 22' is applied on the first coating layer 21 by the dipping. During the dipping step, the tension, dipping time and temperature can be appropriately adjusted, which can be appropriately adjusted by those skilled in the art.

Then, drying and curing of the second coating liquid 22' is performed. The drying and curing can be performed in the drying device 500. The conditions such as temperature and time for drying and curing are as described above.

Through the fixing as described above, the second coating layer 22 is formed on the first coating layer 21. The tire cord 30 manufactured in this way is wound around a second winder 600.

The tire cord 30 having the coating layer formed by dipping as described above may be referred to as a dipped cord.

### Sixth Aspect: Article

In another exemplary embodiment of the present application, the present application relates to an article (or rubber composite) including the rubber reinforcing material. The rubber composite may be, for example, a tire. The tire includes the above-mentioned tire cord.

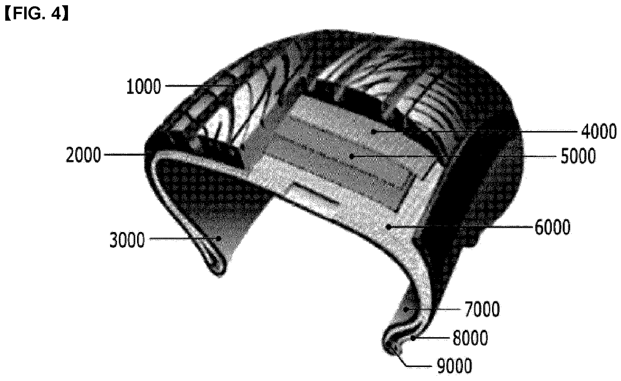

The tire may have a commonly known configuration (e.g., the tire is tread 1000, shoulder 2000, body ply 6000, belt 5000, sidewall 3000, bead 9000, inner liner 7000, cap ply 4000, or apex 8000, etc.) in addition to the tire cord (see Fig. 4 ).

### [ADVANTAGEOUS EFFECTS]

According to an exemplary embodiment of the present application, an adhesive that not only is less harmful to the human body and is environment-friendly, but also provides convenience in the cord manufacturing process and reduces costs, can be provided. Also, the present application has the effect of providing an adhesive that provides properties (e.g., adhesive force) equal to or higher than those of the prior art. In addition, according to another exemplary embodiment of the present application, a rubber reinforcing material (e.g., tire cord) and an article (e.g., tire) prepared by using the adhesive can be provided.

### [DESCRIPTION OF DRAWINGS]

Fig. 1 is a graph showing the wavelength analysis results of the naturally occurring tannic acid (TA1) used in Examples, the synthetic tannic acid (manufactured by Sigma-Aldrich) (TA2), and the RF condensate (divalent phenol, Kolon Industries HiRENOL KOSABOND-R50) (RF) according to infrared spectroscopy. A peak observed in the vicinity of a commonly identified wavenumber of about 1600 to 1620 cm⁻¹ is a peak for an aromatic ring. RF condensate and tannic acid commonly have a benzene ring, but RF is known as a hazardous substance. On the other hand, tannic acid is a non-hazardous substance except direct inhalation of dust. On the other hand, in the case of a naturally occurring tannic acid and a synthetic tannic acid, it is confirmed that they are distinguished according to the presence or absence of a peak near a wavenumber of about 1700 cm⁻¹. The peak near the wavenumber of 1700 cm⁻¹ is a peak appearing in the C=O bond. This peak is considered to be due to the C=O bond generated in the process of artificially synthesizing tannic acid. That is, it can be seen that synthetic tannic acid and naturally occurring tannic acid are distinguished from each other in that the C = O-containing unit is smaller in naturally occurring tannic acid.
Fig. 2 schematically shows a cross section of a tire cord that can be manufactured by using an adhesive composition according to an exemplary embodiment of the present application.
Fig. 3 schematically shows a preparation process of a tire cord.
Fig. 4 schematically shows a cross section of a tire that can be prepared by using an adhesive composition according to an exemplary embodiment of the present application.

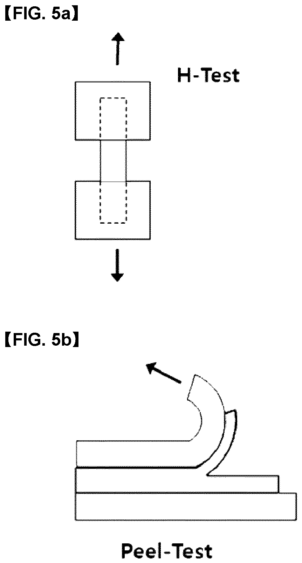

Fig. 5a and Fig. 5b schematically explain the direction of the force applied to each sample in Experiments 1 and 2 related to the evaluation of the adhesive force of the adhesive composition of the present application. Fig. 5a is the direction of the force applied in the H-test of Experiment 1, and Fig. 5b is the direction of the force applied in the Peel-test of Experiment 2.

### [DETAILED DESCRIPTION OF THE EMBODIMENTS]

Hereinafter, actions and effects of the invention will be described in more detail with reference to specific examples of the invention. However, these examples are for illustrative purposes only, and the scope of the invention is not limited thereby in any way.

### Preparation of Compositions of Examples and Comparative Examples

The compositions of Examples and Comparative Examples were prepared by performing the mixing and stirring under the same conditions except that that the content (wt.%) ratio was the same as in Table 1 below. Specifically, each component was mixed and stirred at room temperature (about 20°C) for 24 hours. As a result, condensation polymerization of tannic acid and hexamine was performed in the presence of basic materials.

Table 1 relates to Examples, and Table 2 relates to Comparative Examples. For reference, each component (solvent, NaOH, tannic acid, ammonia, hexamine, and latex) listed in Table below was prepared in a dispersed state in water and then mixed. and the pH of the composition after mixing ranges from 9.0 to 11.0.

**[Table 1] Adhesive compositions of Examples**

| Example | Solvent¹⁾ | Basic material²⁾ (NaOH) | Acid component³⁾ | Basic material (NH₃)⁴⁾ | Nitrogen compound⁵⁾ (HEXAMINE) | Latex⁶⁾ | Solid content (TSC) |
|---|---|---|---|---|---|---|---|
| 1 | 75.62 | 0.05 | 3.60 | 0.03 | 0.20 | 20.50 | 24.38 |
| 2 | 75.57 | 0.10 | 3.60 | 0.03 | 0.20 | 20.50 | 24.43 |
| 3 | 75.52 | 0.15 | 3.60 | 0.03 | 0.20 | 20.50 | 24.48 |
| 4 | 75.47 | 0.20 | 3.60 | 0.03 | 0.20 | 20.50 | 24.53 |
| 5 | 75.42 | 0.25 | 3.60 | 0.03 | 0.20 | 20.50 | 24.58 |
| 6 | 75.37 | 0.30 | 3.60 | 0.03 | 0.20 | 20.50 | 24.63 |
| 7 | 77.72 | 0.05 | 1.50 | 0.03 | 0.20 | 20.50 | 22.28 |
| 8 | 76.97 | 0.30 | 2.00 | 0.03 | 0.20 | 20.50 | 23.03 |
| 9 | 76.47 | 0.30 | 2.50 | 0.03 | 0.20 | 20.50 | 23.53 |
| 10 | 75.97 | 0.30 | 3.00 | 0.03 | 0.20 | 20.50 | 24.03 |
| 11 | 75.47 | 0.30 | 3.50 | 0.03 | 0.20 | 20.50 | 24.53 |
| 12 | 74.97 | 0.30 | 4.00 | 0.03 | 0.20 | 20.50 | 25.03 |
| 13 | 74.47 | 0.30 | 4.50 | 0.03 | 0.20 | 20.50 | 25.53 |
| 14 | 73.97 | 0.30 | 5.00 | 0.03 | 0.20 | 20.50 | 26.03 |
| 15 | 75.40 | 0.05 | 3.60 | 0.25 | 0.20 | 20.50 | 24.60 |
| 16 | 75.50 | 0.30 | 3.00 | 0.50 | 0.20 | 20.50 | 24.50 |
| 17 | 75.25 | 0.30 | 3.00 | 0.75 | 0.20 | 20.50 | 24.75 |
| 18 | 75.00 | 0.30 | 3.00 | 1.00 | 0.20 | 20.50 | 25.00 |
| 19 | 74.75 | 0.30 | 3.00 | 1.25 | 0.20 | 20.50 | 25.25 |
| 20 | 74.50 | 0.30 | 3.00 | 1.50 | 0.20 | 20.50 | 25.50 |
| 21 | 74.25 | 0.30 | 3.00 | 1.75 | 0.20 | 20.50 | 25.75 |
| 22 | 74.00 | 0.30 | 3.00 | 2.00 | 0.20 | 20.50 | 26.00 |
| Unit: wt.% | | | | | | | |
| 1) Solvent (non-solid component): The remaining component except the solid component, which is distilled water. | | | | | | | |
| 2) Basic material: A NaOH product (a state dispersed in water at a concentration of 20 wt.%: mixed concentration of 80 wt.% of water + 20 wt.% of NaOH) provided by Duksan General Chemical Co. Ltd. was used. | | | | | | | |
| 3) Acid component: Naturally occurring tannic acid (a state dispersed in water at a concentration of 50 wt.%: mixed concentration of 50 wt.% of water + 50 wt.% of tannic acid) provided by Duksan General Chemicals Co., Ltd. was used. | | | | | | | |
| 4) Ammonia: Ammonia dissolved in water at a concentration of 25 wt.% (mixed concentration of 75 wt.% of water + 25 wt.% of ammonia) was used. | | | | | | | |
| 5) Nitrogen compound: Hexamine (a state dispersed in water at a concentration of 5wt.%: mixed concentration of 95 wt.% of water + 5 wt.% of hexamine) produced by Sigma-Aldrich was used. | | | | | | | |
| 6) Latex: 0653 VP Latex from Croslene (a state dispersed in water at a concentration of 40.5 wt.%: mixed concentration of 59.5 wt.% of water + 40.5 wt.% of latex) was used. | | | | | | | |

**[Table 2] Adhesive compositions of Comparative Examples**

| Comparative Example | Solvent ¹⁾ | Basic material²⁾ (NaOH) | Acid component³⁾ | Basic material (NH₃) | Nitrogen compound ⁴⁾ (HEXAMINE) | Latex ⁵⁾ | Resor cinol⁶⁾ | Solid content (TSC) |
|---|---|---|---|---|---|---|---|---|
| 1 | 76.27 | 0.00 | 3.00 | 0.03 | 0.20 | 20.50 | 0.00 | 23.73 |
| 2 | 74.27 | 2.00 | 3.00 | 0.03 | 0.20 | 20.50 | 0.00 | 25.73 |
| 3 | 78.97 | 0.30 | 0.00 | 0.03 | 0.20 | 20.50 | 0.00 | 21.03 |
| 4 | 72.97 | 0.30 | 6.00 | 0.03 | 0.20 | 20.50 | 0.00 | 27.03 |
| 5 | 76.00 | 0.30 | 3.00 | 0.00 | 0.20 | 20.50 | 0.00 | 24.00 |
| 6 | 73.00 | 0.30 | 3.00 | 3.00 | 0.20 | 20.50 | 0.00 | 27.00 |
| 7 | 76.17 | 0.30 | 3.00 | 0.03 | 0.00 | 20.50 | 0.00 | 23.83 |
| 8 | 71.17 | 0.30 | 3.00 | 0.03 | 5.00 | 20.50 | 0.00 | 28.83 |
| 9 | 77.97 | 0.30 | 0.00 | 0.03 | 0.20 | 20.50 | 1.00 | 22.03 |
| 10 | 76.97 | 0.30 | 0.00 | 0.03 | 0.20 | 20.50 | 2.00 | 23.03 |
| 11 | 77.97 | 0.30 | 0.00 | 0.03 | 0.20 | 20.50 | 1.00 | 22.03 |
| 12 | 76.97 | 0.30 | 0.00 | 0.03 | 0.20 | 20.50 | 2.00 | 23.03 |
| Unit: wt.% | | | | | | | | |
| 1) Solvent (non-solid component): It is the remaining component except the solid component, which is distilled water. | | | | | | | | |
| 2) Basic material: A NaOH product (a state dispersed in water at a concentration of 20 wt.%: mixed concentration of 80 wt.% of water + 20 wt.% of NaOH) provided by Duksan General Chemical Co. Ltd. was used. | | | | | | | | |
| 3) Acid component: Naturally occurring tannic acid (a state dispersed in water at a concentration of 50 wt.%: mixed concentration of 50 wt.% of water + 50 wt.% of tannic acid) provided by Duksan General Chemicals Co., Ltd. was used. | | | | | | | | |
| 4) Nitrogen compound: Hexamine (a state dispersed in water at a concentration of 5wt.%: mixed concentration of 95 wt.% of water + 5 wt.% of hexamine) produced by Sigma-Aldrich was used. | | | | | | | | |
| 5) Latex: 0653 VP Latex from Croslene (a state dispersed in water at a concentration of 40.5 wt.%: mixed concentration of 59.5 wt.% of water + 40.5 wt.% of latex) was used. | | | | | | | | |
| 6) Resorcinol: Resorcinol dispersed in water at a concentration of 50 wt.% (mixed concentration of 50 wt.% water + 50 wt.% resorcinol) was used. | | | | | | | | |

### Preparation Example

2 Strands of primarily twisted yarns (Z-direction) having a twist number of 360 TPM using a polyester yarn were prepared, and then the 2 strands of primarily twisted yarns were secondarily twisted (S-direction) together with a twist number of 360 TPM to prepare a plied twisted yarn (1650 dtex/2 ply). The plied twisted yarn thus prepared was used as a raw cord .

The polyester raw cord was dipped in the first coating liquid, and then treated for about 1 minute at a drying temperature of 150°C and a curing temperature of 240°C, respectively, to form a first coating layer and thereby, a reactive active group was imparted to the cord. At this time, the first coating liquid was prepared by mixing an epoxy compound and an isocyanate compound in a weight ratio of about 1:2, together with 97 wt.% of demineralized water.

Then, the raw cord on which the first coating layer was formed was dipped in the second coating liquid (adhesive compositions prepared in Examples and Comparative Examples), dried and cured to form the second coating layer. At this time, drying and curing were performed for about 1 minute at a drying temperature of 150°C and a curing temperature of 235°C, respectively. The dipping step of the first coating liquid and the dipping step of the second coating liquid were performed continuously, and the tension condition at this time was 0.5 g/d. A tire cord was prepared in the form of a dipped cord through the above process.

The prepared tire cord was used in Experiments 1 and 2 below.

### Experiment 1: H-test (Pull-Out test)

The adhesive force of the tire cord prepared as described above was evaluated by measuring the Pull-out adhesive force according to ASTM D4776, and the results are recorded in Table 3 below.

Specifically, a rubber sheet with a thickness of 0.6 mm, one strand of cord sheet (prepared in Preparation Example, and a rubber sheet with a thickness of 0.6 mm were sequentially laminated, and vulcanized at 170°C under a pressure of 50 kg/cm² for 15 minutes to prepare a sample. For the prepared specimen, a peeling test was performed at 25°C at a speed of 125 mm/min using a universal material tester (Instron) to measure the adhesive force of the tire cord to the carcass layer, and the relative magnitudes of the measured adhesive forces are described. At this time, the adhesive force is the average value of three times the load generated during peeling, and the values of the adhesive layer formed by the adhesive composition of Example 1 were normalized and relatively compared.

In the case of this H-Test, the peeling test was performed in the vertical direction after laminating and vulcanizing the rubber sheet, whereas in the case of the PEEL test described below, then the peel test was performed in the horizontal direction after laminating and vulcanizing the rubber sheet. There is a difference between the two in this respect.

Through such an experiment, it is possible to compare and confirm the adhesive force and durability of the cord depending on the direction of the force applied to the tire cord.

### Experiment 2: PEEL Test

In order to evaluate the adhesive force per unit area to the tire cords prepared as described above, the adhesive force evaluation was performed in accordance with ASTM D4393, and the results are listed in Table 3 below.

Specifically, a rubber sheet with a thickness of 0.6 mm, a cord sheet (a cord sheet containing the cord prepared in Preparation Example was used, but in accordance with ASTM D4393, the weft yarn was removed, and then the evaluation proceeded with a warp yarn in which the number of warp yarns was 25.4 EPI (end per inch)), a rubber sheet with a thickness of 0.6 mm, and a cord sheet (a cord sheet containing the cord prepared in Preparation Example was used, but in accordance with ASTM D4393, the weft yarn was removed, and then the evaluation proceeded with a warp yarn in which the number of warp yarns was 25.4 EPI (end per inch)), and a rubber sheet with a thickness of 0.6 mm were sequentially laminated, and vulcanized at 170°C under a pressure of 60 kg/cm² for 15 minutes to prepare a sample. And, the sample was cut to prepare a specimen having a width of 1 inch.

For the prepared sample, a peeling test was performed at 25°C at a speed of 125 mm/min using a universal material tester (Instron) to measure the adhesive force of the tire cord to the carcass layer, and the relative magnitudes of the measured adhesive forces were described. At this time, the average value of three times the load generated during peeling was calculated as the adhesive force, and the values of the adhesive layer formed by the adhesive composition of Example 1 were normalized and relatively compared.

### Experiment 3: Dynamic Adhesion Test (Bending Fatigue Test)

In regard to fatigue evaluation for adhesive compositions, the fatigue evaluation was performed for the prepared tire cord in accordance with ASTM D430, and the results are recorded in Table 3 below.

Specifically, a rubber sheet with a thickness of 3.2 mm, a cord sheet (prepared in Preparation Example), a rubber sheet with a thickness of 0.5 mm, a cord sheet (prepared in Preparation Example), and a rubber sheet with a thickness of 3.2 mm were sequentially stacked to prepare a sample, and then, it was vulcanized at a pressure of 60 kg/cm² at 170°C for 15 minutes to manufacture a sample. And, the sample was cut to prepare a specimen having a width of 1 inch.

While conducting a fatigue test on the prepared specimen at a speed of 180 rpm at 100°C using a bending fatigue tester, the adhesive force after fatigue of the tire cord was measured. The calculation formula of the adhesive force after fatigue is as follows: Adhesion after fatigue (%) = (Adhesive force of fatigued portion /Adhesive force of non-fatigued portion) x 100

At this time, the fatigued portion and the non-fatigued portion can be distinguished through a notation that allows each portion to be distinguished before proceeding with the fatigue evaluation as described above. Alternatively, it is possible to distinguish between a fatigued portion and a non-fatigued portion with the naked eye even without the above notation.

The adhesive force after fatigue is the average value of three measurements, and the values measured with the adhesive composition of Example 1 were normalized and relatively compared.

### Experiment 4: Tire Simulation Evaluation

A rubber sheet with a thickness of 1.6 mm, a cord sheet (prepared in Preparation Example), and a rubber sheet with a thickness of 0.5 mm were sequentially laminated, and vulcanized at 160°C for 20 minutes at a pressure of 60 kg/cm² to prepare a sample. Then, the sample was cut to prepare a specimen having a width of 1 inch by 10 cm. For the prepared specimen, tensile strength was measured when the specimen was pulled and cut at a speed of 125 mm/min at 25°C using a universal testing machine (Instron). At this time, the tensile strength is the average value of three times the load generated during cutting, and the values measured in the adhesive composition of Example 1 were normalized and relatively compared.

In Experiments 1-3, peeling evaluation (adhesive force evaluation) was performed after vulcanization, but in the case of Experiment 4, the tensile strength of the rubber specimen itself containing the tire cord was tested instead of peeling evaluation. That is, unlike the evaluation of adhesive force in Experiments 1-3, Experiment 4 can be regarded as a simulation experiment for estimating the durability of a tire including a cord.

**[Table 3]**

| | H-test | Peel test | Dynamic Adhesion Test | Tire Simulation Evaluation |
|---|---|---|---|---|
| Example 1 | 100 | 100 | 100 | 100 |
| Example 2 | 100 | 91 | 90 | 91 |
| Example 3 | 99 | 95 | 87 | 87 |
| Example 4 | 90 | 89 | 88 | 92 |
| Example 5 | 97 | 91 | 88 | 90 |
| Example 6 | 93 | 95 | 86 | 91 |
| Example 7 | 90 | 97 | 85 | 91 |
| Example 8 | 97 | 97 | 88 | 91 |
| Example 9 | 91 | 95 | 89 | 90 |
| Example 10 | 89 | 100 | 88 | 91 |
| Example 11 | 91 | 88 | 90 | 89 |
| Example 12 | 97 | 97 | 88 | 90 |
| Example 13 | 92 | 100 | 86 | 89 |
| Example 14 | 96 | 92 | 89 | 85 |
| Example 15 | 94 | 91 | 85 | 90 |
| Example 16 | 93 | 93 | 90 | 88 |
| Example 17 | 90 | 92 | 88 | 88 |
| Example 18 | 96 | 90 | 88 | 93 |
| Example 19 | 97 | 96 | 87 | 94 |
| Example 20 | 98 | 89 | 89 | 98 |
| Example 21 | 98 | 88 | 89 | 86 |
| Example 22 | 97 | 88 | 89 | 95 |
| Comparative Example 1 | 70 | 66 | 45 | 55 |
| Comparative Example 2 | 53 | 40 | 58 | 47 |
| Comparative Example 3 | 56 | 56 | 42 | 47 |
| Comparative Example 4 | 71 | 63 | 55 | 52 |
| Comparative Example 5 | 73 | 55 | 67 | 55 |
| Comparative Example 6 | 60 | 65 | 62 | 44 |
| Comparative Example 7 | 62 | 51 | 41 | 58 |
| Comparative Example 8 | 72 | 57 | 56 | 65 |
| Comparative Example 9 | 63 | 55 | 60 | 71 |
| Comparative Example 10 | 68 | 47 | 53 | 70 |
| Comparative Example 11 | 74 | 67 | 52 | 40 |
| Comparative Example 12 | 71 | 42 | 52 | 59 |

### [Description of Symbols]

10: raw cord
11: primarily twisted yarn
12: primarily twisted yarn
20: coating layer
21: first coating layer
21': first coating liquid
22: second coating layer
22': second coating liquid
30: tire cord
100: first winder
200: first coating tank
300: first drying device
400: second coating tank
500: second drying device
600: second winder
1000: tread
2000: shoulder
3000: sidewall
4000: cap ply
5000: belt
6000: body fly or carcass
7000: inner liner
8000: apex
9000: bead

## Claims

1. An adhesive composition comprising:
(a) 1.0 to 5.0% by weight of a naturally occurring acid;
(b) 0.01 to 4.0% by weight of a nitrogen compound;
(c) 0.01 to 4.0% by weight of a basic material; and
(d) 5.0 to 50% by weight of a latex,
wherein the adhesive composition comprises, as a basic material, 0.01 to 1.5% by weight of sodium hydroxide (NaOH) as a first basic material, and 0.01 to 2.5% by weight of a second basic material different from the first basic material (wherein, the % by weight of the components (a) to (d) means the solid content occupied by each component in the adhesive composition, and the nitrogen compound and the basic material are different from each other).

2. The adhesive composition of claim 1, wherein the naturally occurring acid is a naturally occurring phenol.

3. The adhesive composition of claim 1, wherein the naturally occurring acid is a naturally occurring tannic acid.

4. The adhesive composition of claim 1, comprising 3.0 to 50.0 parts by weight of the naturally occurring acid based on 100 parts by weight of the latex.

5. The adhesive composition of claim 1, comprising 0.3 to 25.0 parts by weight of the nitrogen compound based on 100 parts by weight of the latex.

6. The adhesive composition of claim 1, comprising 0.1 to 20.0 parts by weight of the basic material based on 100 parts by weight of the latex.

7. The adhesive composition of claim 1, further comprising a solvent.

8. The adhesive composition of claim 7, comprising 30% by weight or more of the solvent based on 100% by weight of the total content of the adhesive composition.

9. The adhesive composition of claim 7 or 8, wherein the solvent comprises water.

10. The adhesive composition of claim 1, wherein the nitrogen compound comprises one or more selected from the group consisting of piperazine, piperidine, pyridine, pyrimidine, pyrrolidine, pyrrole, imidazole, indole, aniline, histidine, tryptophan and hexamine.

11. The adhesive composition of claim 1, wherein the second basic material comprises one or more selected from the group consisting of sodium carbonate (Na₂CO₃), potassium hydroxide (KOH), magnesium hydroxide (Mg(OH)₂) and ammonia (NH₃).

12. The adhesive composition of claim 1, further comprising a condensate of the naturally occurring acid and the nitrogen compound.

13. An adhesive composition, comprising:
5.0 to 50% by weight of a latex;
a condensate of 1.0 to 5.0% by weight of a naturally occurring acid and 0.01 to 4.0% by weight of a nitrogen compound; and
0.01 to 4.0% by weight of a basic material,
wherein the adhesive composition comprises, as a basic material, 0.01 to 1.5% by weight of sodium hydroxide (NaOH) as a first basic material, and 0.01 to 2.5% by weight of a second basic material different from the first basic material, and
wherein the adhesive composition has a pH within the range of 9.0 to 11.0 (wherein, the nitrogen compound and the basic material are different from each other).

14. The adhesive composition of claim 13, wherein the naturally occurring acid comprises a naturally occurring phenol.

15. The adhesive composition of claim 13, wherein the naturally occurring acid is a naturally occurring tannic acid.

16. The adhesive composition of claim 13, wherein the nitrogen compound comprises one or more selected from the group consisting of piperazine, piperidine, pyridine, pyrimidine, pyrrolidine, pyrrole, imidazole, indole, aniline, histidine, tryptophan and hexamine.

17. The adhesive composition of claim 13, wherein the second basic material comprises one or more selected from the group consisting of sodium carbonate (Na₂CO₃), potassium hydroxide (KOH), magnesium hydroxide (Mg(OH)₂) and ammonia (NH₃).

18. A rubber reinforcing material comprising a raw cord containing a fiber; and a coating layer formed on the raw cord,
wherein the coating layer comprises the adhesive composition according to any one of claims 1 and 13.

19. A rubber reinforcing material comprising a raw cord containing a fiber; and a coating layer formed on the raw cord,
wherein the coating layer comprises 100 parts by weight of a latex, 3.0 to 25.0 parts by weight of a naturally occurring acid, 0.3 to 25.0 parts by weight of a nitrogen compound, and 0.1 to 15.0 parts by weight of a basic material, and
wherein the coating layer comprises 0.1 to 9.0 parts by weight of sodium hydroxide (NaOH) as a first basic material and 0.1 to 14.0 parts by weight of a second basic material different from the first basic material, based on 100 parts by weight of the latex.

20. A tire comprising a rubber reinforcing material according to any one of claims 18 and 19.
